# EUROPEAN PATENT SPECIFICATION

(11) **EP 2 296 778 B1**
(45) Date of publication and mention of the grant of the patent: **27.12.2017**
(21) Application number: 09795222.0
(22) Date of filing: 10.07.2009
(51) Int. Cl.: B65G 17/40, B01D 33/04, B01D 33/333, E02B 8/02

(54) **WATER SCREEN BELT MODULE**
WASSERABSCHIRMUNGS-BANDMODUL
MODULE DE COURROIE DE CRIBLE À EAU

(30) Priority: 10.07.2008 US 129668
(43) Date of publication of application: 23.03.2011
(73) Proprietor: Laitram, LLC, Harahan, LA 70123 (US)
(72) Inventor: MACLACHLAN, Gilbert, J., Harahan, LA 70123 (US)
(74) Representative: Walker, Ross Thomson
(86) International application number: PCT/US2009/050186
(87) International publication number: WO 2010/006223

(56) References cited:
- WO-A1-2007/028209
- US-A- 4 935 131
- US-A1- 2006 185 967
- US-A1- 2006 185 967
- US-A1- 2006 201 859
- US-A1- 2007 017 858

## Description

### BACKGROUND OF THE INVENTION

This invention relates to a module for use in constructing a modular traveling water screen for removing solid material from liquids or for use in a conveyor belt providing good air flow or drainage characteristics.

Many industrial and agricultural facilities employ large volumes of water taken directly from outdoor sources such as rivers, streams, lakes, and oceans. Some examples of such facilities include nuclear and coal-fired power plants which use water as a coolant, hydroelectric power facilities which use water to drive turbines, and farms which use water for irrigation. Water taken from such outdoor sources may contain a large amount of solid material, including plant life (twigs, branches, leaves, seaweed, etc.), aquatic animal life, or garbage. If solid material above a certain size is allowed to enter into equipment within such facilities, it may cause clogging of pipes or damage to moving parts, while in the case of aquatic life, such as salmon or other species of fish, there may be a need to prevent the aquatic life from entering equipment within the facilities in order to protect the aquatic life itself. Therefore, facilities which take water directly from outdoor sources are frequently equipped with some sort of filtration equipment for removing solid material from the water before the water enters equipment in the facilities.

Filtration equipment for this purpose sometimes employs a stationary filtering member, such as a screen or a grate, placed on the upstream side of equipment in a facility. However, when a stationary filtering member becomes clogged with the passage of time, it may be difficult or dangerous to access the filtering member in order to clean it or replace it without shutting down the equipment which the filtration equipment is being used to protect.

To overcome this problem, filtration equipment having a filtering member which moves along a path while performing filtration has been developed. One such type of filtration equipment is referred to as a traveling water screen. A traveling water screen (referred to below simply as a water screen) includes one or more filtering members which move along a path which passes through water containing solid material to be removed from the water. When a filtering member of a traveling water screen is passing along a portion of the path which is immersed in water which is to be filtered, solid material in the water can adhere to or rest against the filtering member. When the filtering member is moved along the path to outside of the water, the solid material adhering to or resting against the filtering member can be transported out of the water by the filtering member and then detached from the filtering member, either by simply being allowed to fall from the filtering member or by the application of a force to the solid material, such as by means of a rotating brush or sprayed water. Since solid material is continuously removed from the water screen, large amounts of solid material can be prevented from building up on the surface of the water screen, and the water screen can operate continuously for long periods without the need to stop the water screen or the equipment which the water screen is protecting in order to clean the water screen.

A water screen may comprise a continuous sheet of a filtering material, but frequently it has a modular structure comprising a plurality of similar modules which are pivotably connected to each other end to end in series, with each module equipped with a filtering material. Conventional water screen modules for a modular water screen tend to have a complicated structure including some sort of support frame and a filtering material, such as a wire mesh, laid over and secured to the frame. Because the filtering material and the support are formed separately from each other, they have to be rigidly secured to each other by a joining process such as welding, riveting, or bolting. The process of manufacturing a conventional water screen module thus involves numerous manufacturing steps and is complicated and costly.

In order to simplify the structure of a water screen module, a water screen module which is formed of molded plastic was proposed in US 2006/0185967 A1. In such a water screen module, portions of the module which provide structural support and portions of the module which perform filtration can be integrally formed with each other in a molding step. As a result, the module can be manufactured efficiently and economically.

### SUMMARY OF THE INVENTION

The present invention provides a water screen or conveyor belt module that can utilize the advantages of a molded plastic module while at the same time provide an increased filtering capacity or better fluid flow.

The present invention also provides a modular water screen or a conveyor belt employing such a module.

A water screen or belt module according to one form of the present invention has first and second lengthwise ends and a top surface extending between the lengthwise ends. The top surface includes at least one projection having a plurality of fluid flow openings that provide a pathway for liquid to drain or fluids to flow through the top surface. The projection increases the surface area of the top surface of the module and thereby increases the fluid flow or filtration capacity of the module.

The actual surface area of the top surface of the module is preferably at least 5% and more preferably at least 15% greater than the projected surface area of the top surface of the module.

The module may include a single projection or a plurality of projections. The projections may have a variety of shapes and sizes. When the module includes a plurality of projections, the projections may be the same as or different in shape and size from each other.

Preferably each projection has a wall thickness which is less than the height of the module over at least a portion of the projection.

A modular water screen or conveyor belt according to the present invention comprises a plurality of modules connected to each other in series at hinge joints and includes at least one module according to the present invention. A modular water screen or conveyor belt according to the present invention is not restricted to any particular use, and it can be used for any of the applications in which a conventional water screen or conveyor belt requiring good fluid flow is employed. For example, it can be installed on the upstream side of an inlet for cooling water in a power plant, or it can be installed upstream of the turbines at a hydroelectric dam. The water screen can also be used to remove solid material from sewage prior to undergoing water treatment or from water to be used for irrigation. Although the water screen will frequently be used to remove solid material from water, it can also be used to remove solid material from liquids other than water. Therefore, the terms "water screen" and "water screen module" should not be considered as limiting a water screen or a water screen module according to the present invention to use with water. As another example, the modules can be connected together to form a perforated conveyor belt that provides drainage to remove water from conveyed products or air flow to dry, heat, or cool conveyed products.

### BRIEF DESCRIPTION OF THE DRAWINGS

FIG. 1 is a top axonometric view of an embodiment of a water screen or conveyor belt module according to the present invention.
FIG. 2 is a plan view of the module of FIG. 1.
FIG. 3 is an elevation of one of the widthwise ends of the module of FIG. 1.
FIG. 4 is a bottom axonometric view of the module of FIG. 1.
FIG. 5 is a cross-sectional view taken along line 5-5 of FIG. 2.
FIG. 6 is a top axonometric view of another embodiment of a module according to the present invention.
FIG. 7 is a bottom axonometric view of the module of FIG. 1.
FIG. 8 is a top axonometric view of another embodiment of a module according to the present invention having projections which vary in shape in both the lengthwise and widthwise directions of the module.
FIG. 9 is an elevation of one of the widthwise ends of the module of FIG. 8.
FIG. 10 is an elevation of one of the lengthwise ends of the module of FIG. 8.
FIG. 11 is a cross-sectional elevation taken along line 11-11 of FIG. 9.
FIG. 12 is a top axonometric view of two of the modules of FIG. 1 connected in series.
FIG. 13 is a bottom axonometric view of the modules shown in FIG. 12.
FIG. 14 is a schematic side elevation of an example of a water screen according to the present invention installed on the upstream side of a cooling water inlet.
FIG. 15 is a schematic elevation of the modules of FIG. 12 as viewed from one of the widthwise ends of the modules showing leaves resting on the top surfaces of the modules.

### DESCRIPTION OF PREFERRED EMBODIMENTS

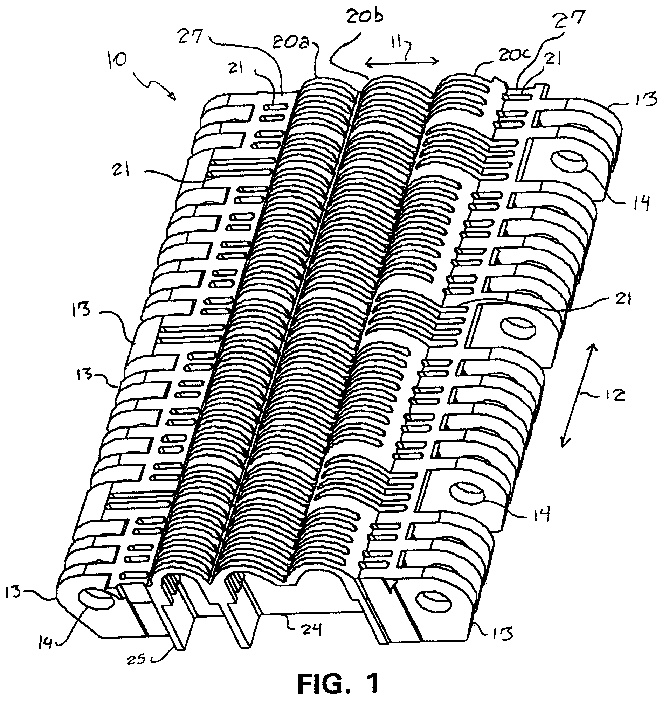

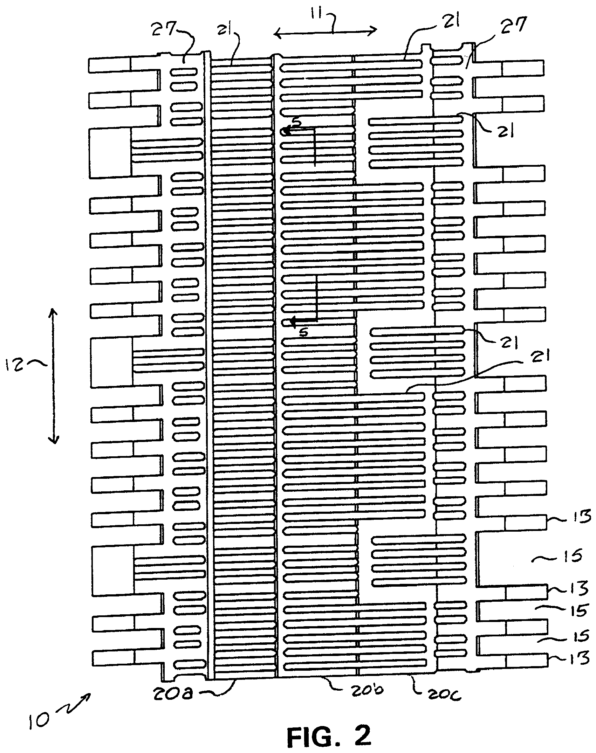

FIGS. 1-5 illustrate a first embodiment of a water screen or perforated conveyor belt module 10 according to the present invention. As shown in FIGS. 1 and 2, which are respectively a top axonometric view and a top plan view, the module 10 has a generally rectangular outline as viewed in plan. When the module 10 is pivotably connected in series with other modules to form a water screen or a conveyor belt, the lengthwise direction of the water screen or belt will extend generally to the left and right in FIGS. 1 and 2. Accordingly, this direction (shown by arrow 11 in FIGS. 1 and 2) will be referred to as the lengthwise direction of the module 10, and the direction perpendicular to the lengthwise direction in a horizontal plane when the module 10 is sitting on a level surface (the direction shown by arrow 12 in FIGS. 1 and 2) will be referred to as the widthwise direction of the module 10.

Each lengthwise end of the module 10 is equipped with at least one bore 14 for receiving an unillustrated hinge rod by which the module 10 can be pivotably connected to a similar module at a hinge joint. Although a single bore at each lengthwise end is sufficient to pivotably connect a module to another module, a module will typically have a plurality of aligned bores spaced in the widthwise direction of the module in each of its lengthwise ends. In this embodiment, a plurality of bores 14 are formed in a plurality of finger-like projections 13 (referred to here as hinge elements) extending in the lengthwise direction at both lengthwise ends of the module 10. Adjoining hinge elements 13 are separated from each other by a space 15 into which a hinge element 13 of an adjoining module can be inserted when two modules are being connected end to end by means of a hinge rod to form part of a water screen or belt. The use of hinge elements (also referred to in the art as link ends) having bores for receiving a hinge rod is common in the design of plastic conveyor belt modules, and the hinge elements 13 in this embodiment may employ the same structure as various types of hinge elements used in conventional conveyor belt modules, including hinge elements having lateral stubs, acting as hinge-rod segments, that are pivotably received in receptacles in the interleaved hinge elements of an interconnected module.

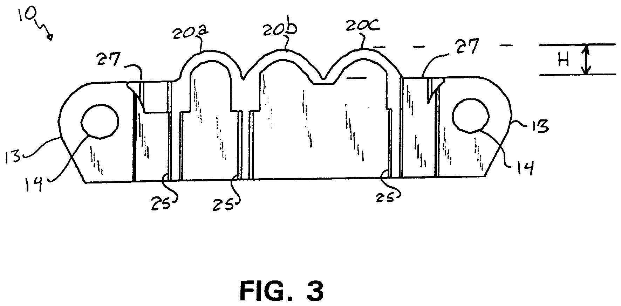

FIG. 3 is an elevation of one of the widthwise ends of the module 10 of FIG. 1. The side of the module 10 which faces up in FIG. 3 will be referred to as the top side of the module, and the side of the module which faces down in FIG. 3 will be referred to as the bottom side of the module. The upwardly facing surface on the top side of the module 10 in FIG. 3 will be referred to as the top surface of the module. During operation of a water screen or conveyor belt employing this module 10, the orientation of the module will typically vary over time as the module 10 moves along a path, and the various sides and surfaces of the module may face in any direction with respect to the vertical. Regardless of the orientation of the module at a given time, the top and bottom sides and the top surface of the module will refer to those sides and surfaces defined with respect to the orientation of the module shown in FIG. 3.

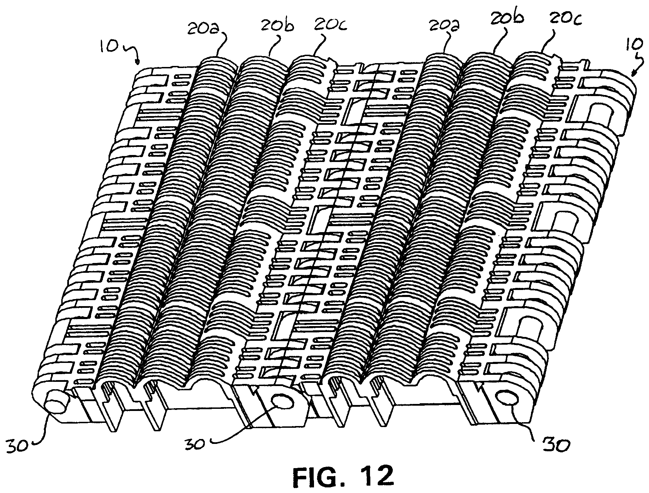

The top surface of the module 10 has an actual surface area which is larger than its projected surface area. The projected surface area refers to the area of the top surface projected on a horizontal plane when the module 10 is in the orientation shown in FIG. 3 in which a plane passing through the axes of the bores 14, i.e., the pivot axes of the hinge elements, at each lengthwise end of the module 10 is horizontal. The actual surface area and the projected surface area of a module 10 are calculated over a region extending between the axis of the bores 14 at one lengthwise end of the module 10 and the axis of the bores 14 at the opposite lengthwise end of the module when each lengthwise end of the module 10 is pivotably connected to a similar module 10 by a hinge rod in the manner shown in FIG. 12 and each of the modules is horizontal. The actual surface area and the projected surface area of a module 10 include the area of any openings formed in the top surface of the module. The actual surface area is preferably at least 5% and more preferably at least 15% greater than the projected surface area. In the embodiment shown in FIGS. 1-5, the actual surface area is approximately 20% greater than the projected surface area. The actual surface area is made larger than the projected surface area of the top surface of the module 10 by the provision of at least one projection in the top surface. For example, the illustrated embodiment includes three arch-shaped projections 20a-20c.

The projections 20a-20c can have a variety of shapes as viewed in profile, such as a shape defined by curves, straight lines, or a combination of curves and straight lines. As shown in FIG. 3, as viewed from a widthwise end of the module 10, each of the projections 20a-20c in this embodiment has the shape of an arch having a curved profile with a height H of approximately 7.4 mm measured between its highest and lowest portions. A module may have a single projection or a plurality of projections. When a module has a plurality of projections, each projection may directly contact another of the projections at one of its lengthwise ends, or there may be a space between adjoining projections. In the illustrated embodiment, each projection 20a-20c is connected at one of its lengthwise ends to another of the projections. Each projection may extend continuously in the widthwise direction of the module, or a plurality of projections may be disposed in the widthwise direction of the module. In this embodiment, each projection 20a-20c has a constant profile over its entire width, but the profile may vary along the width of the module 10. For example, the height H of a projection at a given position in the lengthwise direction of the module 10 may vary in the widthwise direction of the module. Each of projections 20a-20c extends over the entire width of the module 10, but they may extend for a shorter distance, and they may extend for different distances from each other. The projections cause the height of the top surface of the module 10 as measured from a plane passing through the axes of the bores 14 at opposite lengthwise ends of the module 10 to vary over the top surface. The height of the top surface will typically vary by at least 5 mm over the top surface. For example, in the embodiment of FIGS. 1-5, the height of the top surface varies by approximately 7.4 mm, which is the above-mentioned height H of each projection 20a-20c.

A plurality of openings for drainage of liquid or flow of fluids, such as liquids and gases, is formed in the top surface of the module 10, including the top surface of the projections 20a-20c. Each of the fluid flow openings extends through the top surface of the module 10 and fluidly communicates with the bottom end of the module 10 so that fluid can pass through the module 10 in the thickness direction of the module 10 (in the vertical direction in FIG. 3). The dimensions of the openings in the top surface of the module 10 are selected so as to allow liquid to pass through the openings while preventing the passage of solid material above a certain size, whereby the module 10 can perform filtration of liquid. The shape of the fluid flow openings is not critical. In the present embodiment, the openings are in the form of elongated slots 21 extending in the lengthwise direction of the module 10, with each slot 21 having a length greater than its width. The length and width of each slot 21 can be selected in accordance with the size of the solid material which it is desired to prevent from passing through the module 10. When a water screen module is intended to primarily remove debris and aquatic life from water, an example of a suitable range for the width of each slot 21 is in the range of 0.5 to 4 mm. When an opening is in the form of an elongated slot 21, the slot 21 can extend in a direction other than the lengthwise direction of the module 10. However, a slot which extends in the lengthwise direction of the module 10 is advantageous from the standpoints of the strength of the module and the layout of ribs on the underside of the module. In addition, when a water screen employing the module 10 is cleaned by moving the module 10 in its lengthwise direction along a path which passes through sprayed water, fluid flow openings in the form of elongated slots extending in the lengthwise direction of a module can spend a greater length of time in the sprayed water and can be more effectively cleaned.

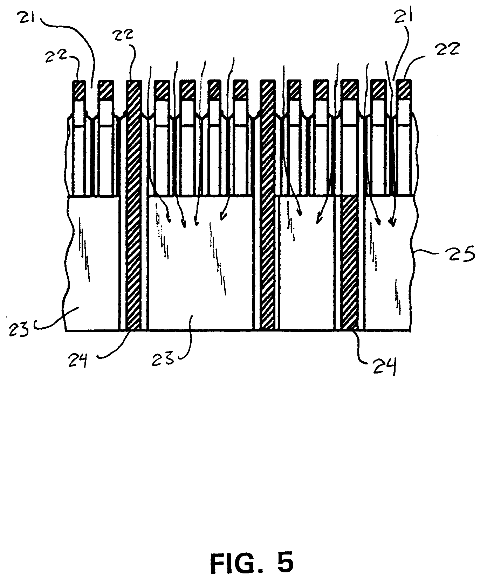

As shown in FIG. 2, each of the slots 21 in this embodiment extends over at least 75% of the length of the projection in which it is formed, with each of the slots 21 in projection 20a extending over substantially the entire length of the projection 20a. The slots 21 may extend continuously between two adjoining projections. For example, a plurality of the slots 21 extend continuously from the vicinity of the left end of projection 20b to the right end of projection 20c in FIG. 2. The slots 21 will typically have the same width as each other, but it is also possible for the width to vary among the slots 21. As shown in FIG. 5, which is a vertical cross-sectional view taken along line 5-5 of FIG. 2, in the present embodiment, the slots 21 divide each of the projections 20a-20c into a plurality of fin-shaped members (referred to simply as fins 22) extending parallel to each other in the lengthwise direction of the module 10.

The open area of the module 10 refers to the percent of the projected area of the module 10 occupied by openings in the top surface of the module and is measured over the same region that the projected surface area is measured, with the module 10 pivotably connected at each of its hinge elements to a similar module 10 in the manner shown in FIG. 12 and with each module horizontal. There is no strict limit on the open area of a module according to the present invention, but typically it will be at least 15% and frequently in the range of approximately 30% to approximately 60%.

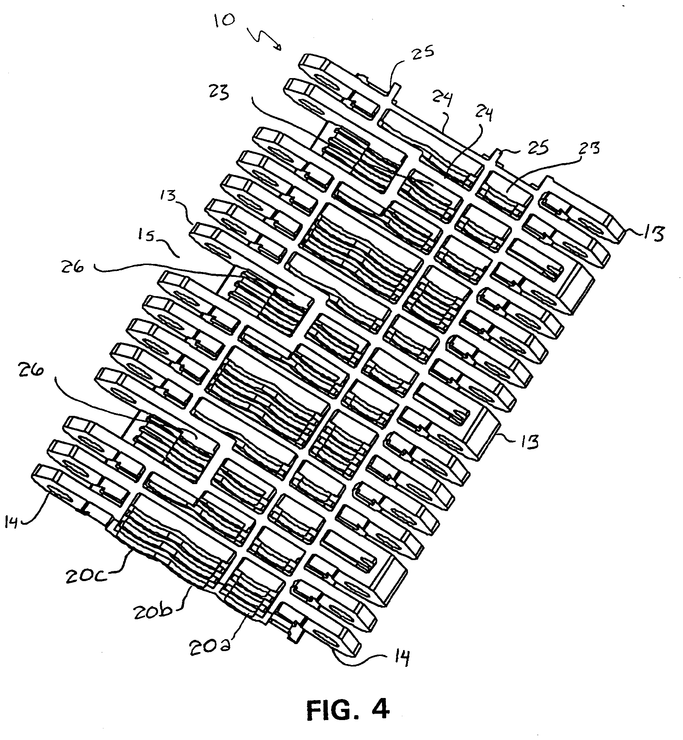

The flow resistance of a slot 21 to the passage of liquid through the slot 21 in the thickness direction of the module 10 is preferably as low as possible for a slot 21 having given dimensions at its upper end. The flow resistance of a slot 21 depends on its length and width as well as on its depth measured in the thickness direction of the module 10. Therefore, the depth of each slot 21 is preferably as small as possible to reduce flow resistance. In order to decrease the depth of the slots 21, each of projections 20a-20c is hollow over at least a portion of its area so that in the hollow portions, the wall thickness of the projections (and therefore the depth of the slots 21 formed in the projections) is less than the height of the module 10 at that point. The lower end of each slot 21 opens onto an enlarged chamber or plenum 23 that has a larger horizontal cross-sectional area than an individual slot 21 and that opens onto the bottom end of the module 10. The sides of the plenums 23 are formed by a plurality of lengthwise ribs 24 extending in the lengthwise direction of the module 10 and a plurality of transverse ribs 25 extending in the widthwise direction on the underside of the module 10. The ribs 24 and 25 are shown extending to the bottom end of the module 10, but they may extend for a shorter distance. Each plenum 23 can receive liquid passing through a plurality of the slots 21 and discharge the received liquid out the lower end of the module 10. In some locations, the projections 20a-20c may be unsupported from below. In other locations, the lower ends of the projections 20a-20c may be supported atop the upper ends of the lengthwise ribs 24 or the transverse ribs 25. For example, as shown in FIG. 3, at one of the widthwise ends of the illustrated module 10, each of the lengthwise ends of projection 20a is supported atop a transverse rib 25, but only one of the lengthwise ends of each of projections 20b and 20c is supported atop a transverse rib 25, and projections 20b and 20c are not supported from below by a transverse rib 25 where these two projections join each other. As shown in FIG. 4, which is a bottom axonometric view of the module 10, there are also locations along the width of the module 10 where projections 20b and 20c are supported by a transverse rib 25 at both of their lengthwise ends, and there are also locations where projection 20a is supported at only one of its lengthwise ends by a transverse rib 25 and is unsupported from below at its other lengthwise end.

As shown in FIG. 5, in this embodiment, some of the fins 22 defined by the slots 21 coincide with and are integrally formed with some of the lengthwise ribs 24, although it is also possible for all of the fins 22 to be offset from the lengthwise ribs 24 in the widthwise direction of the module 10.

A water screen or conveyor belt module according to the present invention is typically a substantially rigid member which undergoes only insignificant deformation under normal conditions of use, i.e., any deformation is elastic and not readily apparent without the use of measuring tools. The wall thickness of projections in the top surface of the module (such as projections 20a-20c) is normally selected such that the projections substantially retain their shape when a pressure differential exists between the top and bottom sides of the module during ordinary operation of the module as a water screen, i.e., the projections are not intended to collapse during use. The pressure differential between the top and bottom sides of a water screen module during operation of a water screen employing the module is typically in the range of 0.2 to 2.2 psi.

In the same manner as with a modular conveyor belt, a water screen comprising one or more modules according to the present invention will usually be driven along a prescribed path by means of sprockets or rollers which engage with the undersurface of the water screen and are rotated by a suitable drive mechanism. Conveyor belt modules which are driven by sprockets are typically either center driven (meaning that a sprocket engages with a module midway between the lengthwise ends of a module), hinge driven (meaning that a sprocket engages with a module at a lengthwise ends of the module), or a combination of center and hinge driven. A module according to the present invention may employ any of these drive arrangements. The illustrated module 10 is of the hinge-driven type. It has a plurality of tooth pockets 26 formed on the underside of the module 10 at intervals along its width in which the teeth of sprockets can nest when the module 10 is passing around a sprocket in a conventional manner.

In the illustrated embodiment, the lengthwise ends of projections 20a and 20c are spaced from the lengthwise ends of the module 10 by a flat deck 27. However, as long as the projections do not interfere with pivoting of adjoining modules 10 of a water screen with respect to each other as the water screen is passing along a path, the projections may extend up to the lengthwise ends of the module 10.

The length and the width of the module 10 are not restricted, since a modular water screen or conveyor belt employing a module 10 according to the present invention can be given a desired length by connecting a plurality of modules end to end in series, and it can be given a desired width by arranging a plurality of modules side by side in a row. An example of a typical length of a module 10 is an overall length of approximately 4.25 inches with a pitch (the distance between the centers of the bores 14 at opposite lengthwise ends of the module 10) of approximately 3.5 inches, and an example of a typical width is 6 to 12 inches.

The dimensions of a modular water screen or conveyor belt formed from a plurality of modules will depend upon the specific application. A water screen or belt may have the width of a single module, but more commonly, a plurality of modules will be arranged side by side in a row in the widthwise direction of the modules. For example, a water screen is frequently 10 or more feet wide with more than one module in each row and the rows pivotably connected together to form an endless conveyor belt or water screen.

A module according to the present invention can be made of any material that is compatible with the environment of use, but a plastic module and particularly a molded plastic module (such as an injection molded plastic module) is especially suitable from the standpoints of corrosion resistance, cost, and ease of manufacture. In addition, it has been found that solid material in water in which a module is immersed less readily adheres to a module made of plastic than to one made of metal, making it easier to clean the module and prevent the buildup of solid material on the module. The entire module 10 shown in FIGS. 1-5 can be formed as a one-piece member by injection molding without the need for machining or joining of separately formed members to each other. Plastics typically used for the manufacture of modular plastic conveyor belts (polypropylene, polyethylene, acetals, etc.) are generally suitable for use in a water screen module according to the present invention.

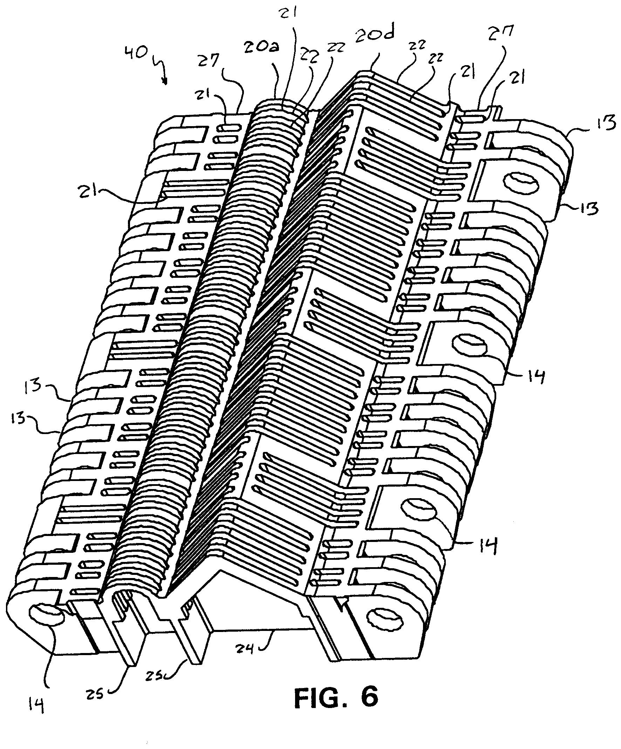

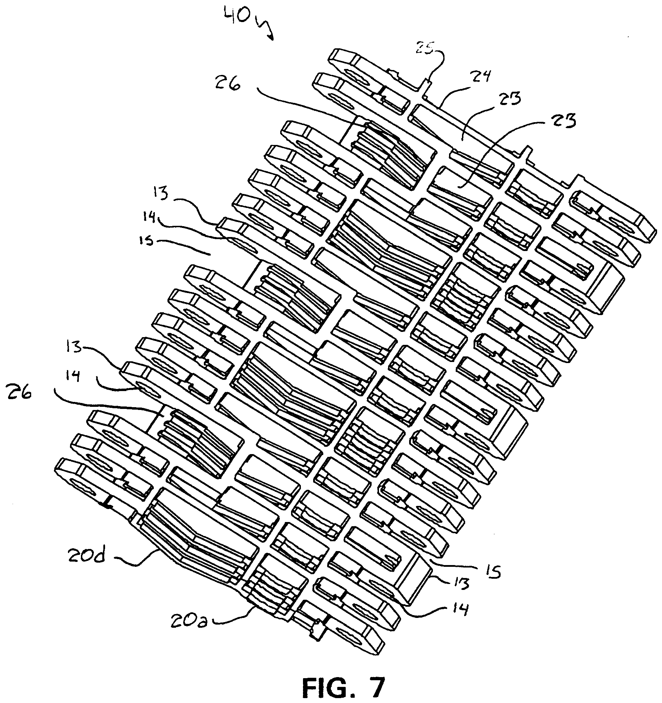

As stated above, the projections of a module according to the present invention need not be curved in profile. FIGS. 6 and 7 are respectively a top and a bottom axonometric view of another embodiment of a water screen or conveyor belt module 40 according to the present invention. Instead of having only curved projections, the module has a curved projection 20a and a V-shaped projection 20d on its top surface. The V-shaped projection 20d has two sloping sides which slope along a straight line as viewed from a widthwise end of the module 40 and meet at a ridge extending along a straight line in the widthwise direction of the module 40. The curved projection 20a has the same size and shape as projection 20a in the embodiment of FIG. 1, while the V-shaped projection 20d has the same length as the combined length of projections 20b and 20c of the embodiment of FIG. 1. In addition to having a greater length than projection 20c, projection 20d has a greater height than projection 20a. However, it is also possible for the V-shaped projection 20d to have dimensions which are the same as or smaller than those of projection 20a. Like the projections 20a-20c of FIG. 1, the V-shaped projection 20d has a plurality of fluid flow openings in the form of slots 21 extending in the lengthwise direction of the module 40. Some of the slots 21 are formed in just one of the sloping sides of the V-shaped projection 20d, with other of the slots 21 extend continuously over the ridge at the top of projection 20d between opposite sloping sides of projection 20d. Like projection 20a, the V-shaped projection 20d is divided by the slots 21 into a plurality of parallel fins 22 extending in the lengthwise direction of the module 40.

Like projection 20a, the V-shaped projection 20d is hollow over at least a portion of its area so that the wall thickness of the projection 20d is less than the height of the module 20 in the hollow portions. As a result, the slots 21 extend only partway through the depth of the projection 20d and drain into plenums 23 formed on the underside of the module 40 in the same manner as shown in FIG. 5 with respect to the preceding embodiment. The structure of this embodiment may be otherwise the same as that of the embodiment of FIGS. 1-5. In this embodiment, the actual surface area of the top surface of the module 40 is approximately 30% greater than the projected surface area.

A modular water screen or conveyor belt according to the present invention includes a plurality of modules pivotably connected end to end in series, with at least one of the modules being a module according to the present invention. A modular water screen or conveyor belt according to the present invention may be formed entirely from modules according to the present invention, or it may be formed from one or more modules according to the present invention combined with modules having a different structure from that of a module according to the present invention. The other modules may or may not perform a filtering or a fluid flow function. For example, modules without fluid flow openings may be interspersed with modules that can perform a fluid flow or filtering function. Different embodiments of a module according to the present invention can also be combined in a single water screen or belt.

A modular water screen according to the present invention may include various attachments for lifting solid material out of water being filtered and moving the solid material to another location. For example, attachments such as plates, scoops, or buckets can be secured to the modules or between modules at one or more locations along the length of a water screen. When the attachments are traveling along an upwardly moving portion of the path of a water screen, they can lift solid material out of the water and carry it to a location along the path of the water screen where the solid material can be collected. One use of scoops and buckets is to safely transport fish from the upstream side of a water screen to a location downstream of or outside of a flow path leading to any equipment which could harm the fish. Examples of attachments capable of being used with a modular water screen are disclosed in US 2006/0185967 A1. A wide variety of attachments used with conventional modular plastic conveyor belts can also be employed.

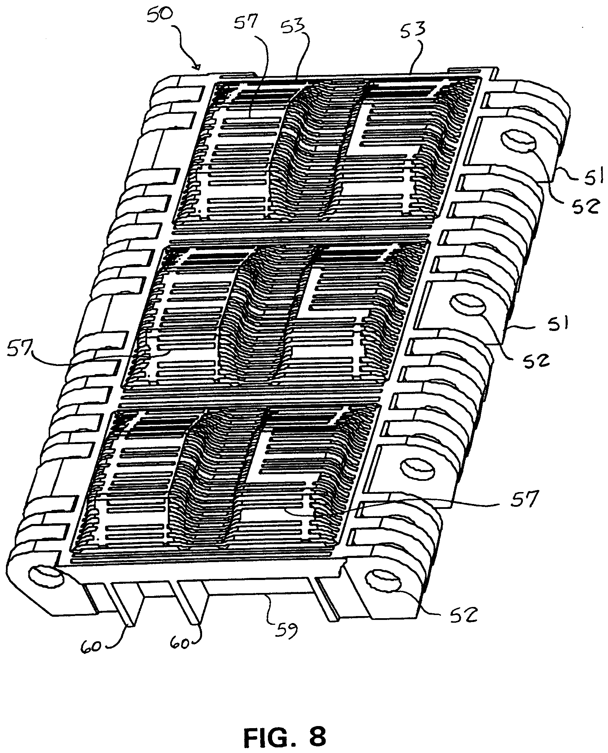

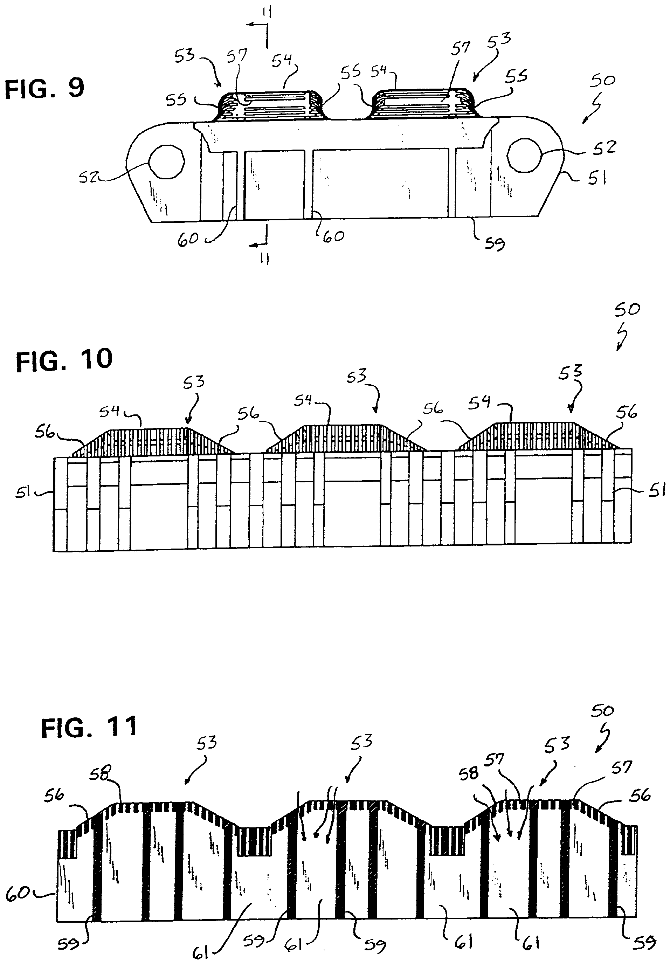

FIGS. 8-11 illustrate another embodiment of a water screen or conveyor belt module 50 according to the present invention in which the height of a projection formed on the top surface of a module varies in the widthwise direction of the module instead of being constant as in the embodiments of FIGS. 1-7. Like the preceding embodiments, this module 50 has a generally rectangular periphery as viewed in plan and has a plurality of hinge elements 51 formed along the edges of the module 50 at both of its lengthwise ends. Each of the hinge elements 51 has a circular bore 52 for pivotably receiving an unillustrated hinge rod by means of which the module 50 can be pivotably connected in series with other modules to form a water screen or a conveyor belt. As shown in FIG. 8, which is a top axonometric view, the top surface of the module 50 has a plurality of projections 53 for increasing the surface area of the top surface. In the illustrated example, the module 50 includes six projections 53 arranged in two rows extending in the widthwise direction of the module, with each row containing three of the projections 53. As best seen in FIGS. 9 and 10, which are respectively an elevation as viewed from one of the widthwise ends and an elevation as viewed from one of the lengthwise ends of the module 50, each projection 53 has a flat upper end 54, a pair of sloping sides 55 at the lengthwise ends of the projection 53, and a pair of sloping sides 56 at the widthwise ends of the projection 53. The sloping sides 55 at the lengthwise ends are outwardly convex at their upper ends adjoining the upper end 54 of the projection 53 and outwardly concave at their lower ends. Each of the sloping sides 56 at the widthwise ends of each projection 53 is sloped along a straight line between the upper and lower ends of the projection 53 as viewed in FIG. 10. A plurality of drainage or fluid flow openings in the form of slots 57 extending in the lengthwise direction of the module 50 are formed in the top surface of the module 50, including in the top 54 and sloping sides 55 and 56 of each projection 53. As shown in FIG. 11, which is a cross-sectional view taken along line 11-11 of FIG. 9, each of the projections 53 is hollow and has a wall thickness which is less than the height of the module 50 over most of its area. The slots 57 divide each projection 53 into a plurality of parallel fins 58 each extending in the lengthwise direction of the module 50 and each having a length greater than its width. The open area of the top surface of the module 50 is approximately 30%. The actual surface area of the top surface of the module 50 is approximately 15% greater than the projected surface area of the top surface of the module 50, with the actual surface area and the projected surface area having the same definitions as in the embodiment of FIGS. 1-5.

As in the preceding embodiments, a plurality of lengthwise ribs 59 and transverse ribs 60 that provide structural support for the module 50 are formed on its underside. As shown in FIG. 11, the ribs 59 and 60 also define a plurality of plenums 61 on the underside of the projections 53 which communicate with the slots 57. As shown by the arrows in FIG. 11, each plenum 61 receives water draining through a plurality of the slots 57 in the top surface of the module 50 and discharges the water through the bottom side of the module.

Although not shown in the drawings, the underside of the module 50 is shaped so as to be able to engage with sprockets for driving a traveling water screen or conveyor belt along a path. Any of the structures described with respect to the embodiment of FIGS. 1-5 for enabling a module to engage with sprockets can be employed in this embodiment as well.

The slots 57 in this embodiment may have various lengths, depending upon the structure of the underside of the module 50, since for strength reasons, it may be desirable to limit the extent to which the slots 57 extend through the transverse ribs 60. As can be seen in FIG. 8, some of the slots 57 are formed only in the top 54 of a projection 53 or only in one of the sloping sides 55 or 56 of a projection 53, while other slots 57 extend continuously between the top 54 and one of the sloping sides 55 of a projection, or between one of sloping sides 55 and one of sloping sides 56 of a projection 53. In addition, some of the slots 57 extend continuously between two projections 53 spaced from each other in the lengthwise direction of the module 50.

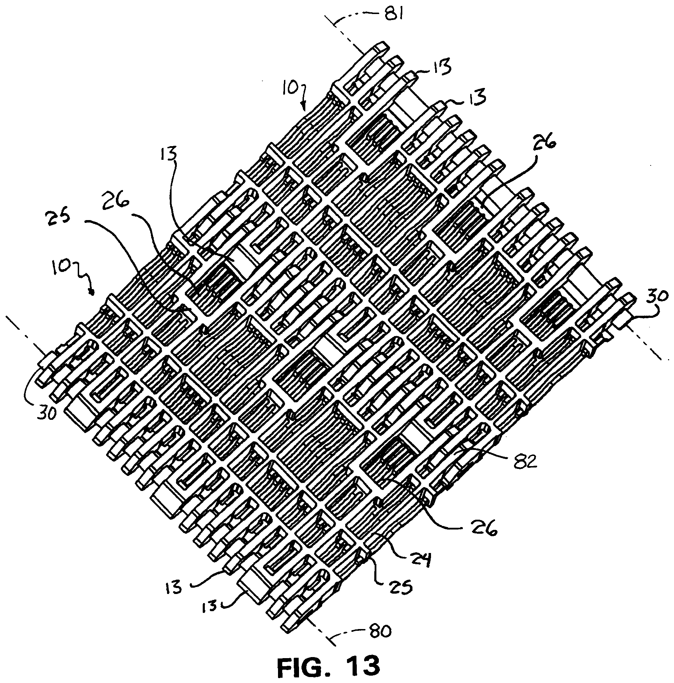

FIGS. 12 and 13 are respectively a top and a bottom axonometric view of two of the modules 10 of FIG. 1 showing how they can be connected in series when forming part of a water screen or conveyor belt. The other embodiments of modules according to the present invention can be connected in series in a similar manner. The two illustrated modules 10 are placed end to end with the hinge elements 13 at one lengthwise end of one module 10 interfitting with the hinge elements 13 at one lengthwise end of the other module 10 and with the bores 14 at one lengthwise end of one module 10 aligned with the bores 14 at one lengthwise end of the other module 10. In this state, a hinge rod 30 can be passed through the aligned bores 14 to pivotably connect the two modules 10 to each other in series at a hinge joint 82 that allows the connected modules to pivot relative to each other along aligned first and second pivot axes 80, 81. In the state shown in FIGS. 12 and 13, the widthwise ends of the two modules 10 are aligned with each other. More typically, two modules which are connected in series in a modular water screen or a conveyor belt will be connected in a "bricklayed" manner in which the widthwise ends, or hinge elements, of a module in one row of the water screen or belt are offset in the widthwise direction of the water screen with respect to the widthwise ends of the modules in the adjoining rows of the water screen or belt.

As shown in FIG. 13, when two modules 10 are connected in series, one of the lengthwise ends of each tooth pocket 26 adjoins the end surface of one of the hinge elements 13 of the adjoining module, and the other lengthwise end of each tooth pocket 26 adjoins one of the transverse ribs 25 of the module. When the modules 10 are passing around drive sprockets such that the teeth of the drive sprockets nest in the tooth pockets 26 of one of the modules, if the drive sprockets are rotated in a first rotational direction, the teeth of the sprockets engage with the end surfaces of the hinge elements 13 adjoining the tooth pockets 26 and drive the module and the water screen in a first lengthwise direction. When the drive sprockets are rotated in the opposite rotational direction, the teeth of the sprockets engage with the transverse ribs 25 adjoining the tooth pockets 26 and drive the module and the water screen in the opposite lengthwise direction.

When a water screen or conveyor belt module according to the present invention is intended to be installed at a widthwise end of a water screen or conveyor belt, the module 10 may include a retaining mechanism at one of its widthwise ends for releasably retaining a hinge rod in the bores 14 of the module 10 and preventing the hinge rod from moving in the widthwise direction of the module 10 and becoming disengaged from the bores 14. A wide variety of retaining mechanisms have been developed for use with modular plastic conveyor belts, and any such mechanisms can be used with a module according to the present invention. A few examples of known retaining mechanisms which may be suitable for use with a water screen or conveyor belt module according to the present invention are finger-like retainers that can bend into or out of the path of movement of a hinge rod, sliding members that can slide between a position in which they are engaged with or disengaged from a hinge rod, clips which can snap over the ends of a hinge rod to secure the hinge rod in place, and pins that can engage with the ends of a hinge rod. The modules shown in FIGS. 1-11 are not equipped with such a retaining mechanism, but they can be easily modified by a person skilled in the art to include a retaining mechanism, such as any of the conventional types of retaining mechanisms mentioned above. The modules shown in FIGS. 1-11 can be installed in a water screen or a belt in a location spaced from the widthwise ends of the water screen or belt (as so-called "internal modules"), and modules equipped with a retaining mechanism for a hinge rod can be positioned at the widthwise ends of the water screen (as so-called "edge modules"). Alternatively, if a retaining mechanism comprises part of a hinge rod rather than part of a module itself, the modules shown in FIGS. 1-11 can be used either as internal modules or as edge modules.

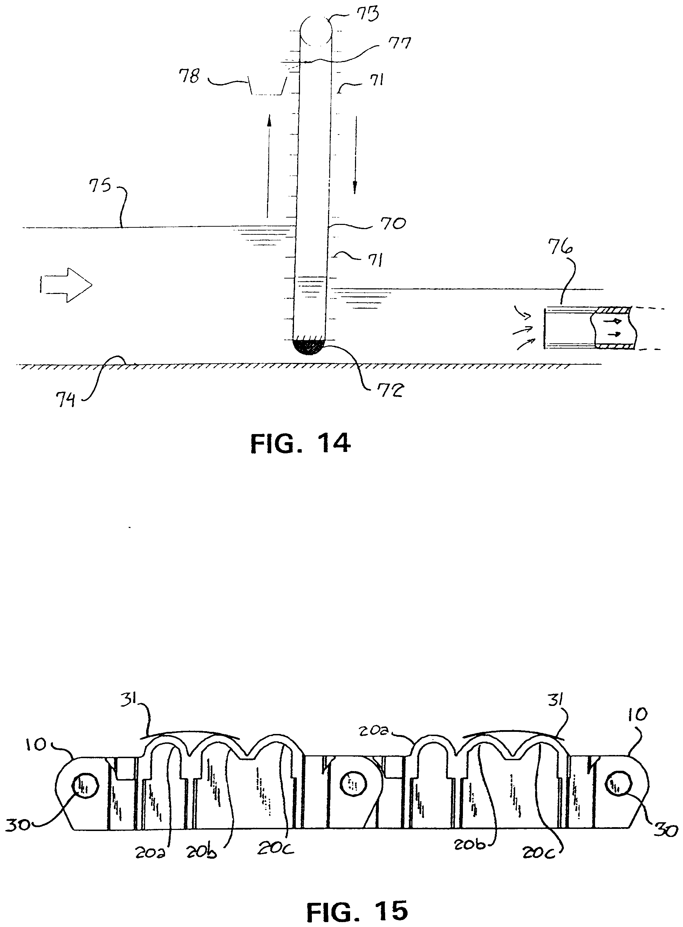

FIG. 14 schematically illustrates a modular water screen 70 according to the present invention being used to filter water on the upstream side of a cooling water inlet 76 in an industrial facility. The water screen 70 comprises a plurality of water screen modules according to the present invention pivotably connected in series. At its lower end, the water screen 70 passes around a stationary shoe 72 which is submerged in a water channel 74 leading to the water inlet 76, and at its upper end, the water screen 70 passes around a set of rotatable drive sprockets 73 which are mounted outside of the water channel 74. The drive sprockets 73 are rotatably driven by an unillustrated drive motor in the clockwise direction in the figure to drive the water screen in the direction shown by arrows. The water screen 70 is installed so that the top surface of each module faces outwards from the interior of the loop formed by the water screen 70. Namely, the top surface of a module faces to the left when the module is on the left side of the loop defined by the water screen 70 and faces to the right when the module is on the right side of the loop defined by the water screen 70 as viewed in FIG. 14. Cooling water 75 flows through the channel 74 from left to right in the figure as shown by the hollow arrow, passes through the water screen 70, and then enters the cooling water inlet 76. Due to the resistance to flow of liquid through the water screen 70, the static head of the cooling water 75 is different on the upstream side of the water screen 70, the interior of the loop defined by the water screen 70, and the downstream side of the water screen 70, as indicated by the different levels of the cooling water 75 in FIG. 14. The illustrated water screen 70 is equipped with plates 71 at intervals along its length for carrying solid material upwards out of the cooling water 75. Solid material carried by the plates 71 can be dumped from the plates 71 when the plates 71 reach the upper end of the path of the water screen 70 and are inverted. Alternatively, as shown in FIG. 14, a plurality of nozzles 77 may be installed on the interior of the loop defined by the water screen 70 above the surface of the cooling water 75, and the nozzles 77 can spray water at the bottom sides of the modules forming the water screen 70 to detach solid material adhering to the top surface of the modules or resting on the plates 71. The material detached by the spray of water from the nozzles 77 can be collected in a trough 78, for example, adjoining the water screen 70 and be carried by the trough 78 to a suitable location for disposal or relocation. Adhered solid material can also be removed from the modules and the plates 71 by other means, such as by a rotating brush.

The provision of one or more projections on the top surface of a water screen module according to the present invention increases the surface area in which fluid flow openings can be formed in the top surface of the module and thereby increases the surface area available for filtration. The provision of a plurality of projections on the top surface of a water screen module according to the present invention also helps to keep the fluid flow openings in the top surface of the module from being obstructed when solid objects in water being treated are pressed against the top surface of the module. FIG. 15 is an elevation of the two modules 10 of FIG. 12 as viewed from one of the widthwise ends of the modules and schematically shows a state in which solid objects such as a leaves 31 are pressed against the top surface of each module 10 by water pressure. If the top surfaces of the modules 10 were completely flat, the entirety of the portions of the top surfaces of the modules 10 beneath the leaves 31 would be blocked off by the leaves 31, and water would be unable to drain through these portions. However, because the top surfaces of the modules 10 in FIG. 15 are not completely flat but instead have a plurality of projections 20a-20c, each leaf 31 can be supported by a plurality of the projections such that only a portion of each leaf 31 contacts the top surface of one of the modules 10, and gaps are present between portions of the bottom surface of each leaf 31 and the top surface of the corresponding module 10. These gaps form channels along which water can flow beneath the leaves 31 to reach fluid flow openings formed in the top surfaces of the module 10 beneath the leaves 31. In this manner, a plurality of projections increases the effectiveness of a water screen module in filtration. Likewise, in a conveyor belt constructed of such modules, drainage from the top surface or air flow through the openings is increased.

## Claims

1. A moulded plastic module (10) suitable for use in a water screen or a conveyor belt, the module (10) comprising first and second lengthwise ends, first and second hinge elements (13) formed at the first and second lengthwise ends and defining widthwise first and second pivot axes (80, 81), respectively, a top surface extending between the first and second lengthwise ends,
wherein the module (10) is molded as one piece, and wherein a plurality of projections (20a-20c) are formed on the top surface, **characterised by** each projection having a plurality of fluid flow openings formed therein, wherein the fluid flow openings comprise slots (21) elongated in the lengthwise direction of the module and a plurality of the slots (21) extend continuously between two of the projections (20b, 20c).

2. A module (10) as claimed in claim 1 wherein at least one of the projections (20a-20c) has a profile as viewed in a widthwise direction (12) of the module (10) which is constant over the width of the projection.

3. A module (50) as claimed in claim 1 wherein at least one of the projections (53) has a profile as viewed in a widthwise direction (12) of the module (50) which varies over the width of the projection (53).

4. A module (50) as claimed in claim 1 wherein each projection (53) has a top surface (54) and a bottom surface which is parallel to the top surface over at least a portion of the projection (53).

5. A module (50) as claimed in claim 1 wherein a plurality of the projections (53) each has a surface (55, 56) that is sloped with respect to a plane passing through the first and second pivot axes (81, 82), the sloped surface including at least one of the fluid flow openings (57).

6. A module (50) as claimed in claim 1 wherein a height of the top surface of the module varies by at least 5 mm with respect to a plane passing through the first and second pivot axes (81. 82).

7. A module (10) as claimed in claim 1 wherein the slots (21) have a width of 0.5 to 4 mm.

8. A module (10) as claimed in claim 1 wherein a plurality of the fluid flow openings extend only partway through the height of the module.

9. A module (10) as claimed in claim 1 wherein the top surface of the module has an open area of at least 15%.

10. A module (10) as claimed in claim 1 including a plenum (23) formed underneath each projection (20a-20c) and fluidly communicating with a plurality of the fluid flow openings and with a bottom of the module.

11. A module (10) as claimed in claim 1 wherein the projections (20a-20c) have a plurality of unobstructed fluid flow openings formed on the top surface.

12. A module (10) as claimed in claim 1 wherein the projection (20a-20c) includes a region in which a wall thickness of the projections is less than a height of the module (10) in that region measured to a plane passing through the first and second hinge axes.

13. A module (10) as claimed in claim 1 wherein the fluid flow openings divide the projections (20a-20c) into a plurality of parallel fins (22) extending in a lengthwise direction (11) of the module (10).

14. A water screen (70) comprising a plurality of modules (10) as in claim 1 pivotably connected together in rows of one or more of the modules (10) wherein the first hinge elements (13) along one row are interfitted with the second hinge elements (13) along an adjacent row to form a hinge joint (82) connecting the adjacent rows together and allowing them to pivot relative to each other along the aligned first and second pivot axes (80, 81) of the interfitted first and second hinge elements (13).

15. A perforated conveyor belt comprising a plurality of modules (10) as in claim 1 pivotably connected together in rows of one or more of the modules (10) wherein the first hinge elements (13) along one row are interfitted with the second hinge elements (13) along an adjacent row to form a hinge joint (82) connecting the adjacent rows together and allowing them to pivot relative to each other along the aligned first and second pivot axes (80, 81) of the interfitted first and second hinge elements (13).

## Patentansprüche

1. Kunststoffformmodul (10), das für die Verwendung in einer Wasserabschirmung oder einem Förderband geeignet ist, wobei das Modul (10) erste und zweite Längsenden, erste und zweite Gelenkelemente (13), die an den ersten und zweiten Längsenden gebildet sind und erste und zweite Schwenkachsen (80, 81) breitenmäßig definieren, bzw. eine obere Fläche, die sich zwischen den ersten und zweiten Längsenden erstreckt, umfasst,
worin das Modul (10) einstückig geformt ist und worin eine Mehrzahl von Vorsprüngen (20a-20c) auf der oberen Fläche gebildet ist, **dadurch gekennzeichnet, dass** jeder Vorsprung eine Mehrzahl von darin gebildeten Fluid-Durchflussöffnungen aufweist, worin die Fluid-Durchflussöffnungen Schlitze (21) umfassen, die in der Längsrichtung des Moduls langgestreckt sind, und sich eine Mehrzahl der Schlitze (21) durchgehend zwischen zwei der Vorsprünge (20b, 20c) erstreckt.

2. Modul (10) nach Anspruch 1, worin mindestens einer der Vorsprünge (20a-20c) ein Profil, in einer Breitenrichtung (12) des Moduls (10) gesehen, aufweist, das über die Breite des Vorsprungs konstant ist.

3. Modul (50) nach Anspruch 1, worin mindestens einer der Vorsprünge (53) ein Profil, in einer Breitenrichtung (12) des Moduls (50) gesehen, aufweist, das über die Breite des Vorsprungs (53) variiert.

4. Modul (50) nach Anspruch 1, worin jeder Vorsprung (53) eine obere Fläche (54) und eine untere Fläche, die parallel zur oberen Fläche über mindestens einen Abschnitt des Vorsprungs (53) ist, aufweist.

5. Modul (50) nach Anspruch 1, worin eine Mehrzahl der Vorsprünge (53) jeweils eine Fläche (55, 56) aufweist, die mit Bezug auf eine durch die ersten und zweiten Schwenkachsen (81, 82) verlaufende Ebene geneigt ist, wobei die geneigte Fläche mindestens eine der Fluid-Durchflussöffnungen (57) beinhaltet.

6. Modul (50) nach Anspruch 1, worin eine Höhe der oberen Fläche des Moduls um mindestens 5 mm mit Bezug auf eine durch die ersten und zweiten Schwenkachsen (81, 82) verlaufende Ebene variiert.

7. Modul (10) nach Anspruch 1, worin die Schlitze (21) eine Breite von 0,5 bis 4 mm aufweisen.

8. Modul (10) nach Anspruch 1, worin sich eine Mehrzahl der Fluid-Durchflussöffnungen nur teilweise durch die Höhe des Moduls erstreckt.

9. Modul (10) nach Anspruch 1, worin die obere Fläche des Moduls eine offene Fläche von mindestens 15 % aufweist.

10. Modul (10) nach Anspruch 1, beinhaltend eine Kammer (23), die unterhalb jedes Vorsprungs (20a-20c) gebildet ist und in Fluidverbindung mit einer Mehrzahl der Fluid-Durchflussöffnungen und mit einem Unterteil des Moduls steht.

11. Modul (10) nach Anspruch 1, worin die Vorsprünge (20a-20c) eine Mehrzahl von auf der oberen Fläche gebildeten unbehinderten Fluid-Durchflussöffnungen aufweisen.

12. Modul (10) nach Anspruch 1, worin der Vorsprung (20a-20c) einen Bereich beinhaltet, in dem eine Wandstärke der Vorsprünge weniger als eine Höhe des Moduls (10) in diesem Bereich, gemessen mit Bezug auf eine durch die ersten und zweiten Gelenkachsen verlaufende Ebene, beträgt.

13. Modul (10) nach Anspruch 1, worin die Fluid-Durchflussöffnungen die Vorsprünge (20a-20c) in eine Mehrzahl von parallelen Rippen (22) unterteilen, die sich in einer Längsrichtung (11) des Moduls (10) erstrecken.

14. Wasserabschirmung (70) umfassend eine Mehrzahl von Modulen (10) nach Anspruch 1, die in Reihen von einem oder mehreren der Module (10) schwenkbar miteinander verbunden sind, worin die ersten Gelenkelemente (13) entlang einer Reihe und die zweiten Gelenkelemente (13) entlang einer benachbarten Reihe ineinandergesteckt sind, um eine Gelenkverbindung (82) zu bilden, die die benachbarten Reihen miteinander verbindet und ihnen das Schwenken relativ zueinander entlang der ausgerichteten ersten und zweiten Schwenkachsen (80, 81) der ineinandergesteckten ersten und zweiten Gelenkelemente (13) erlaubt.

15. Gelochtes Förderband, umfassend eine Mehrzahl von Modulen (10) nach Anspruch 1, die in Reihen von einem oder mehreren der Module (10) schwenkbar miteinander verbunden sind, worin die ersten Gelenkelemente (13) entlang einer Reihe und die zweiten Gelenkelemente (13) entlang einer benachbarten Reihe ineinandergesteckt sind, um eine Gelenkverbindung (82) zu bilden, die die benachbarten Reihen miteinander verbindet und ihnen das Schwenken relativ zueinander entlang der ausgerichteten ersten und zweiten Schwenkachsen (80, 81) der ineinandergesteckten ersten und zweiten Gelenkelemente (13) erlaubt.

## Revendications

1. Un module en plastique moulé(10) convenant pour être utilisé dans un crible à eau ou une bande transporteuse, le module (10) comprenant des premières et deuxièmes extrémités dans la longueur, des premiers et deuxièmes éléments de charnière (13) formés aux premières et deuxièmes extrémités dans la longueur et définissant respectivement dans la largeur des premiers et deuxièmes axes de pivotement dans la largeur (80, 81), une surface supérieure s'étendant entre les premières et deuxièmes extrémités dans la longueur,
dans lequel le module (10) est moulé d'un seul tenant, et dans lequel une pluralité de saillies (20a-20c) sont formées sur la surface supérieure, **caractérisé par** chaque saillie ayant une pluralité d'ouvertures d'écoulement de fluide formées dans celle-ci, dans lequel les ouvertures d'écoulement de fluide comprennent des fentes (21) allongées dans le sens de la longueur du module et une pluralité des fentes (21) s'étendent continuellement entre deux des saillies (20b,20c).

2. Un module (10) selon la revendication 1 dans lequel une ou plusieurs des saillies (20a-20c) a un profil tel que vu dans un sens de la largeur (12) du module (10) qui est constant sur la largeur de la saillie.

3. Un module (50) selon la revendication 1 dans lequel une ou plusieurs des saillies (53) a un profil tel que vu dans un sens de la largeur (12) du module (50) qui varie sur la largeur de la saillie (53).

4. Un module (50) selon la revendication 1 dans lequel chaque saillie (53) a une surface supérieure (54) et une surface inférieure qui est parallèle à la surface supérieure sur au moins une partie de la saillie (53).

5. Un module (50) selon la revendication 1 dans lequel une pluralité des saillies (53) chacune ayant une surface (55, 56) qui est inclinée par rapport à un plan passant à travers les premiers et deuxièmes axes de pivotement (81, 82), la surface inclinée incluant une ou plusieurs des ouvertures d'écoulement de fluide (57).

6. Un module (50) selon la revendication 1 dans lequel une hauteur de la surface supérieure du module varie d'au moins 5 mm par rapport à un plan passant à travers les premiers et deuxièmes axes de pivotement (81, 82).

7. Un module (10) selon la revendication 1 dans lequel les fentes (21) ont une largeur comprise entre 0,5 et 4 mm.

8. Un module (10) selon la revendication 1 dans lequel une pluralité des ouvertures d'écoulement de fluide s'étendent seulement en partie à travers la hauteur du module.

9. Un module (10) selon la revendication 1 dans lequel la surface supérieure du module a une superficie ouverte d'au moins 15%.

10. Un module (10) selon la revendication 1 incluant un plénum (23) formé sous chaque saillie (20a-20c) et en communication fluidique avec une pluralité des ouvertures d'écoulement de fluide et avec une partie inférieure du module.

11. Un module (10) selon la revendication 1 dans lequel les saillies (20a-20c) ont une pluralité d'ouvertures d'écoulement de fluide non obstruées formées sur la surface supérieure.

12. Un module (10) selon la revendication 1 dans lequel la saillie (20a-20c) inclut une région dans laquelle une épaisseur de paroi des saillies est inférieure à une hauteur du module (10) dans cette région mesurée par rapport à un plan passant à travers les premiers et deuxièmes axes de charnière.

13. Un module (10) selon la revendication 1 dans lequel les ouvertures d'écoulement de fluide divisent les saillies (20a-20c) en une pluralité d'ailettes parallèles (22) s'étendant dans un sens de la longueur (11) du module (10).

14. Un crible à eau (70) comprenant une pluralité de modules (10) selon la revendication 1 raccordés de manière pivotante ensemble en rangées d'un ou de plusieurs des modules (10) dans lequel les premiers éléments de charnière (13) le long d'une rangée sont emboîtés avec les deuxièmes éléments de charnière (13) le long d'une rangée adjacente pour former une articulation (82) reliant les rangées adjacentes ensemble et leur permettant de pivoter les uns par rapport aux autres le long des premiers et deuxièmes axes de pivotement alignés (80, 81) des premiers et deuxièmes éléments de charnière emboîtés (13).

15. Une bande transporteuse perforée comprenant une pluralité de modules (10) selon la revendication 1 raccordés de manière pivotante ensemble en rangées d'un ou de plusieurs des modules (10) dans lequel les premiers éléments de charnière (13) le long d'une rangée sont emboîtés avec les deuxièmes éléments de charnière (13) le long d'une rangée adjacente pour former une articulation (82) reliant les rangées adjacentes ensemble et leur permettant de pivoter les uns par rapport aux autres le long des premiers et deuxièmes axes de pivotement alignés (80, 81) des premiers et deuxièmes éléments de charnière emboîtés (13).
